# EUROPÄISCHE PATENTSCHRIFT

(11) **EP 0 902 167 B1**
(45) Veröffentlichungstag und Bekanntmachung des Hinweises auf die Patenterteilung: **29.10.2003**
(21) Anmeldenummer: 97810659.9
(22) Anmeldetag: 15.09.1997
(51) Int. Cl.: F01D 25/12

(54) **Kühlvorrichtung für Gasturbinenkomponenten**
Cooling device for gas turbine components
Dispositif de refroidissement pour les éléments d'une turbine à gas

(43) Veröffentlichungstag der Anmeldung: 17.03.1999
(60) Teilanmeldung: 02017183.1
(73) Patentinhaber: ALSTOM (Switzerland) Ltd, 5401 Baden (CH)
(72) Erfinder: Anderson, Gordon, 5400 Baden (CH); Ferber, Jörgen, 79790 Küssaberg (DE); Hall, Keneth, Gainsville, GA30506 (US); Hock, Michael, 80791 München (DE); Tarada, Fathi, Dr., 3122 Kehrsatz (CH); Weigand, Bernhard, Dr., 79761 Waldshut-Tiengen (DE)

(56) Entgegenhaltungen:
- WO-A-94/12765
- GB-A- 2 280 935
- US-A- 5 374 161

## Beschreibung

### Technisches Gebiet

Die Erfindung betrifft eine Segmentanordnung für Plattformen, insbesondere in einer Gasturbine, an deren Oberfläche ein Heißgasstrom entlangströmt, mit nebeneinander angeordneten, jeweils durch einen Spalt voneinander getrennten Segmenten wobei in mindestens einem Teilbereich des Spalts der Heißgasstrom eine Geschwindigkeitskomponente senkrecht zur Richtung des Spaltes, von einem ersten Segment zu einem zweiten Segment aufweist.

### Stand der Technik

Um eine maximale Turbinenleistung zu erzielen, ist es vorteilhaft, bei den höchstmöglichen Gastemperaturen zu arbeiten. In modernen Gasturbinen sind dabei die Temperaturen so hoch, daß viele Bauteile gekühlt werden müssen, da sonst die für maximale Haltbarkeit zulässige Temperatur der Bauteile überschritten würde. Eine geeignete Auslegung und/oder Kühlung kritischer Bauteile ist daher in modernen Gasturbinen von entscheidender Bedeutung. Das Kühlungsproblem von Plattformen tritt in Ringbrennkammern verstärkt auf, da diese ein sehr gleichmäßiges Temperaturprofil am Eingang zur Turbine erzeugen. Dies bedingt, daß die Plattform der Schaufel fast die mittlere Heißgastemperatur zu ertragen hat. Zur Erzielung möglichst geringer NO_{X}-Emissionen wird in modernen Brennkammern nahezu der gesamte Anteil der Verbrennungsluft durch die Brenner selbst geleitet, der Anteil der Kühlluft für die Filmkühlung der Brennkammer also reduziert. Dies führt ebenfalls zu einem gleichmäßigeren Temperaturprofil am Turbineneingang und somit zu einer erhöhten thermischen Belastung.

Kritische Bauteile in Turbinen stellen unter anderen Hitzeschilde, Brennkammersegmente und Brennkammerplatten, Lauf- und Leitschaufeln, Innen- und Außendeckbänder der Lauf- und Leitschaufeln, sowie Lauf- und Leitschaufelplattformen dar.

Insbesondere an den Seiten von nebeneinander angeordneten Segmenten (Plattformen) kommt es erfahrungsgemäß oft zu einer erhöhten thermischen Belastung. Sind etwa die Segmente einer Plattform mit einer Wärmedämmschicht beschichtet, stellt man oft ein Abplatzen der Beschichtung fest. Dadurch entsteht eine Schwachstelle, an der sich rasch Oxide bilden, die ihrerseits das Abblättern der Beschichtung fördern. So können bald große unbeschichtete Metallflächen dem Heißgasstrom ausgesetzt sein.

Die Schrift WO 94/12765 offenbart zwei benachbarte Laufschaufeln. Die Plattformen dieser Laufschaufeln werden zwischen der Druckseite einer Schaufel und der Saugseite der benachbarten Schaufel durch ein Filmkühlung unter Ausnutzung der bestehenden Wirbelstruktur während des Betriebs der Laufschaufeln gekühlt. Dieser mittlere Bereich ist der Bereich der Plattformen mit der grössten thermischen Belastung.

Die Schrift US-A-5,374,161 zeigt ein Wärmestausegment einer Gasturbine, mit internen Kühlkanälen ausgestattet ist. Zwischen zwei benachbarten Segmenten wird die Kühlluft in den Heissgasstrom der Gasturbine eingeblasen.

### Darstellung der Erfindung

Der Erfindung liegt die Aufgabe zugrunde, die in Hinblick auf hohe Temperaturen kritischen Bauteile, insbesondere aus Segmenten zusammengesetzte Bauteile, so auszulegen, daß die thermische Belastung dieser Bauteile mit möglichst einfachen Mitteln effektiv reduziert wird.

Diese Aufgabe wird erfindungsgemäß durch die Merkmale des Anspruchs 1 gelöst.

Bei der Erfindung ist vorteilhaft jedem Segment eine Kühlluftkammer zugeordnet. Es kann dabei für jedes Segment eine verschiedene Kühlluftkammer vorgesehen sei, es kann aber auch dieselbe Kühlluftkammer mehreren Segmenten zugeordnet sein. Voraussetzung für die Anwendbarkeit der Erfindung ist wieder, daß der Heißgasstrom in mindestens einem Teilbereich des Spalts zwischen den Segmenten eine Geschwindigkeitskomponente senkrecht zur Richtung des Spalts hat und somit vom einem ersten zu einem zweiten Segment weist. In diesem Teilbereich wird entlang der dem Spalt zugewandten Kante des ersten Segments zumindest eine Filmkühlbohrung angebracht. Die Form dieser Filmkühlbohrungen ist beliebig, bevorzugt sind sie zylindrisch und/oder trichterförmig geformt, besonders bevorzugt sind sie auf der Kühlluftkammerseite zylindrisch und öffnen sich zur Heißgasseite hin trichterförmig. Die Achse der Filmkühlbohrungen zeigt vorteilhaft nicht gegen die Heißgasströmungsrichtung, sondern auf den Spalt zu, und schließt mit der Oberfläche einen Winkel von 10 bis 50 Grad, bevorzugt von 25 bis 45 Grad, besonders bevorzugt von etwa 35 Grad ein. Dadurch bildet sich an der Oberfläche des Segments in der Nähe der vom Heißgasstrom beaufschlagten Kante des benachbarten Segments ein Kühlluftfilm, der diese Kante kühlt und damit schützt. Durch den relativ flachen Winkel zwischen Bohrung und Oberfläche wird die Wirkung des Kühlfilms optimiert.

Zusätzlich ist entlang der dem Spalt zugewandten Kante des zweiten Segments zumindest eine Kantenkühlbohrung angebracht sein. Die Kantenkühlbohrungen beginnen in der dem Segment zugeordneten Kühlluftkammer und zeigen wie die Filmkühlbohrungen auf den Spalt zu. Die Form der Kantenkühlbohrungen ist beliebig, bevorzugt sind sie zylindrisch geformt. Anders als die Filmkühlbohrungen des benachbarten Segments enden die Kantenkühlbohrungen nicht an der dem Heißgasstrom ausgesetzten Oberfläche, sondern münden in den die Segmente trennenden Spalt. Dabei ist darauf zu achten, daß der Winkel der Kantenkühlbohrungen so flach gehalten ist, daß die austretende Kühlluft nicht sofort in das Heißgas geblasen wird, da es sonst zu starken Verlusten kommen würde, da die Kühlluft entgegen der Flußrichtung des Heißgases ausbläst. Die Kantenkühlbohrungen schließen mit der Oberfläche einen Winkel von 5 bis 50 Grad, bevorzugt von 20 bis 40 Grad, besonders bevorzugt von etwa 30 Grad ein. Der Zweck der Kantenkühlbohrungen ist es, im Spalt eine Kühlluftregion bereitzustellen, die als konvektive Wärmesenke wirkt. Die Kantenkühlbohrungen blasen die Kühlluft in den Spalt zwischen den Segmenten und sorgen somit für eine ausreichende Kühlung im Spalt. Die Kombination von Filmkühlbohrungen und Kantenkühlbohrungen liefert also zum einen eine schützende Kühlluftschicht für die vom Heißgasstrom beaufschlagte Seitenkante jedes Segments, und stellt zum anderen durch die Kantenkühlbohrungen eine Wärmesenke im trennenden Spalt bereit, die den vom Heißgasstrom eingebrachten Wärmestrom konvektiv abführt.

Auch hier kann es durch Umkehr der Strömungsrichtung des Heißgasstrom zur Ausbildung eines zweiten Teilbereichs im Spalt kommen, in dem der Heißgasstrom vom zweiten Segment über den Spalt zur Oberfläche des ersten Segments strömt. In diesem zweiten Teilbereich wird die Anordnung von Filmkühlbohrungen und Kantenkühlbohrungen vertauscht, dort wird also entlang der dem Spalt zugewandten Kante des zweiten Segments zumindest eine Filmkühlbohrung angebracht, und entlang der dem Spalt zugewandten Kante des ersten Segments zumindest eine Kantenkühlbohrung angebracht. In einem Übergangsbereich zwischen dem ersten und zweiten Teilbereich wird der Heißgasstrom im wesentlichen parallel zu der Richtung des Spalts strömen. In diesem Übergangsbereich wird vorteilhaft entlang der dem Spalt zugewandten Kante jedes der beiden Segmente zumindest eine Kantenkühlbohrungen angebracht. Im Übergangsbereich fehlen also die Filmkühlbohrungen. Der durch die Kantenkühlbohrungen bereitgestellte konvektive Wärmeentzug bleibt jedoch zur Kühlung erhalten.

Befindet sich eine Aussparung im Inneren der Segmente, die beispielsweise einen Dichtstreifen enthält, so werden die Filmkühlbohrungen und Kantenkühlbohrungen so angebracht, daß sie diese Aussparung nicht treffen.

Die Filmkühlbohrungen und Kantenkühlbohrungen können einander am Spalt gegenüberliegend angebracht sein. In einer bevorzugten Ausgestaltung sind Filmkühlbohrungen und Kantenkühlbohrungen jedoch gegeneinander lateral, also in Richtung des Spalts, versetzt angeordnet. In einer weiteren bevorzugten Ausgestaltung weisen die Filmkühlbohrungen und/oder Kantenkühlbohrungen einen lateralen Anstellwinkel auf. Vorteilhaft werden die Bohrungen mit einem solchen Anstellwinkel angebracht, daß ihre Achsen etwa entlang der Richtung des Heißgasstroms zeigen.

Bei einer weiteren Ausführungsform sind nun Filmkühlbohrungen und/oder Kantenkühlbohrungen angebracht und zusätzlich ist die vom Heißgas beaufschlagte Kante jedes Segments abgeschrägt oder abgerundet. Sind Kantenkühlbohrungen vorgesehen, so werden in dem einen und, falls vorhanden, dem zweiten Teilbereich die Kantenkühlbohrungen und Abschrägung bzw. Abrundung so aufeinander abgestimmt, daß die Tiefe der Zurücksetzung bis zu der spaltseitigen Öffnung der Kantenkühlbohrung reicht. Dadurch wird der Endbereich der Kantenkühlbohrungen von der Abschrägung oder Abrundung erfaßt, wodurch die Kantenkühlbohrungen offen bleiben, auch wenn die Spaltbreite durch Fertigungstoleranzen oder transiente Bedingungen im Betrieb auf Null reduziert sein sollte.

In einer weiteren Ausführungsform werden ebenfalls Filmkühlbohrungen und/oder Kantenkühlbohrungen angebracht und zusätzlich ist die vom Heißgas beaufschlagte Kante jedes Segments abgeschrägt oder abgerundet. Im Gegensatz zur vorher beschriebenen Ausführungsform werden hier die Kantenkühlbohrungen und Abschrägung bzw. Abrundung so aufeinander abgestimmt, daß die Tiefe der Zurücksetzung die spaltseitigen Öffnung der Kantenkühlbohrung nicht erreicht. Dagegen wird die dem Spalt zugewandte Innenseite des dem abgeschrägten Segment gegenüberliegenden Segments mit einer konkaven, beispielsweise etwa parabolischen Aussparung versehen, so daß der aus der Kantenkühlbohrung austretende Kühlluftstrom an dieser Aussparung umgelenkt wird. Im Inneren der Kantenkühlbohrung fließt der Kühlluftstrom zunächst im wesentlichen entgegen der Richtung des Heißgasstroms. Durch die Umlenkung verläßt der Kühlluftstrom dann den Spalt im wesentlichen parallel zum Heißgasstrom. Damit kann dieser Kühlluftstrom auch noch einen schützenden Film an der Oberfläche ausbilden.

Existieren in der beschrieben Ausführungsform zwei Teilbereiche mit entgegengesetzter senkrechter Geschwindigkeitskomponente des Heißgasstroms und ein Übergangsbereich dazwischen, so wird im Übergangsbereich auf die Aussparung verzichtet. Im Übergangsbereich sind auf beiden Seiten des Spalts Kantenkühlbohrungen angeordnet und die Abschrägungen oder Abrundungen der jeweiligen Kanten werden, allmählich auf Null reduziert.

In einer weiteren Ausführungsform wird in dem einem Teilbereich des Spalts, in dem der Heißgasstrom eine Geschwindigkeitskomponente von einem ersten zu einem zweiten Segment aufweist, entlang der dem Spalt zugewandten Kante des ersten Segments zumindest eine Kantenkühlbohrung angebracht. Diese Kantenkühlbohrungen bilden mit der Oberfläche einen Winkel β, und enden nicht an der dem Heißgasstrom ausgesetzten Oberfläche, sondern münden in den die Segmente trennenden Spalt. Die von dem Heißgasstrom beaufschlagte Kante des zweiten Segments ist, wie im ersten Aspekt der Erfindung beschrieben, unter einem Winkel α abgeschrägt oder abgerundet. Dabei wird der Winkel β in einem Bereich um 30 Grad um den Winkel α gewählt. Durch die Verbindung von stromaufwärts liegender Kantenkühlbohrung und stromabwärts liegender Zurücksetzung der gegenüberliegenden Kante bleibt der austretende Kühlluftfilm nicht auf das Volumen des Spalts beschränkt. Er bildet vielmehr zunächst eine schützende Kühlluftschicht über der Abschrägung oder Abrundung und tritt dann auf die vom Heißgasstrom umströmte Oberfläche aus. Aufgrund der gewählten Orientierung der Kantenkühlbohrung und Abschrägung tritt der Kühlluftstrom im wesentlichen parallel zur Heißgasstromrichtung aus, wodurch ein optimaler Kühlluftfilm erzeugt wird. Auch diese Ausführungsform bietet den Vorteil, daß die Kantenkühlbohrungen offen bleiben, auch wenn die Spaltbreite durch Fertigungstoleranzen und/oder transiente Bedingungen im Betrieb auf Null reduziert sein sollte.

Alle beschrieben Aspekte und Ausführungsformen können im Rahmen der Erfindung miteinander kombiniert werden um die thermische Belastung kritischer Bauteile möglichst weit zu reduzieren. Wenn die Erfindung auch vorstehend für eine Segmentanordnung, insbesondere für eine Gasturbine beschrieben wurde, so kann die Erfindung doch mit Vorteil bei allen aus Segmenten zusammengesetzten, einem Heißgasstrom ausgesetzten kritische Bauteilen angewandt werden, wie z.B. Hitzeschilde, Brennkammersegmente und Brennkammerplatten, Lauf- und Leitschaufeln, Innen- und Außendeckbänder der Lauf- und Leitschaufeln, sowie Lauf- und Leitschaufelplattformen. Der Einsatz ist nicht auf Gasturbine beschränkt, auch andere Heißgassysteme, etwa Flugzeugturbinen sind im Rahmen der Erfindung.

### Kurze Beschreibung der Zeichnungen

Die Erfindung soll nachfolgend anhand eines Ausführungsbeispiels im Zusammenhang mit den Zeichnungen näher erläutert werden. Es zeigen:
- Fig. 1: ein schematische perspektivische Ansicht der Leitschaufelplattformen einer Gasturbine;
- Fig. 2: eine Seitenansicht der Leitschaufelplattform aus Richtung 2 von Fig. 1;
- Fig. 3: eine Untersicht der unteren Plattform aus der Richtung 3-3 von Fig. 2 mit eingezeichneten Partikeltrajektorien des Heißgasstroms;
- Fig. 4: einen Schnitt der Anschlußstelle zweier Plattformsegmente in Richtung 4-4 von Fig. 2 (Stand der Technik);
- Fig. 5: einen Schnitt wie Fig. 4, entsprechend verschiedene Ausführungsbeispiele der Abschrägungen an den Segmenten;
- Fig. 6a: eine Detailansicht von Fig. 5 im Bereich der Abschrägung/Abrundung des stromabwärtigen Segments;
- Fig. 6b: eine Detailansicht einer Abwandlung von Fig. 5 im Bereich der Abschrägung/Abrundung des stromabwärtigen Segments;
- Fig. 6c: eine Detailansicht einer weiteren Abwandlung von Fig. 5 im Bereich der Abschrägung/Abrundung des stromabwärtigen Segments;
- Fig. 7: eine Untersicht wie Fig. 3,
- Fig. 8: eine perspektivische Ansicht zweier Segmente einer Leitschaufel einer Hochdruckturbine;
- Fig. 9: einen Schnitt wie Fig. 4, entsprechend einem ersten Ausführungsbeispiel der Erfindung;
- Fig. 10: eine schematische Auf- oder Untersicht eines Teilbereichs zweier Segmente entsprechend einer Ausgestaltung des ersten Ausführungsbeispiels der Erfindung;
- Fig. 11: eine schematische Auf- oder Untersicht zweiter Segmente entsprechend einer weiteren Ausgestaltung des ersten Ausführungsbeispiels der Erfindung;
- Fig. 12: einen Schnitt wie Fig. 4, entsprechend einem weiteren Ausführungsbeispiel der Erfindung;
- Fig. 13: einen Schnitt wie Fig. 4, entsprechend einem weiteren Ausführungsbeispiel der Erfindung;
- Fig. 14: einen Schnitt wie Fig. 4, entsprechend einem weiteren Ausführungsbeispiel der Erfindung;

Es sind nur die für das Verständnis der Erfindung wesentlichen Elemente gezeigt. Nicht gezeigt sind beispielsweise der vollständige Leitschaufelring, die Brennkammer und das Abgasgehäuse der Gasturbine mit Abgasrohr und Kamin.

### Wege zur Ausführung der Erfindung

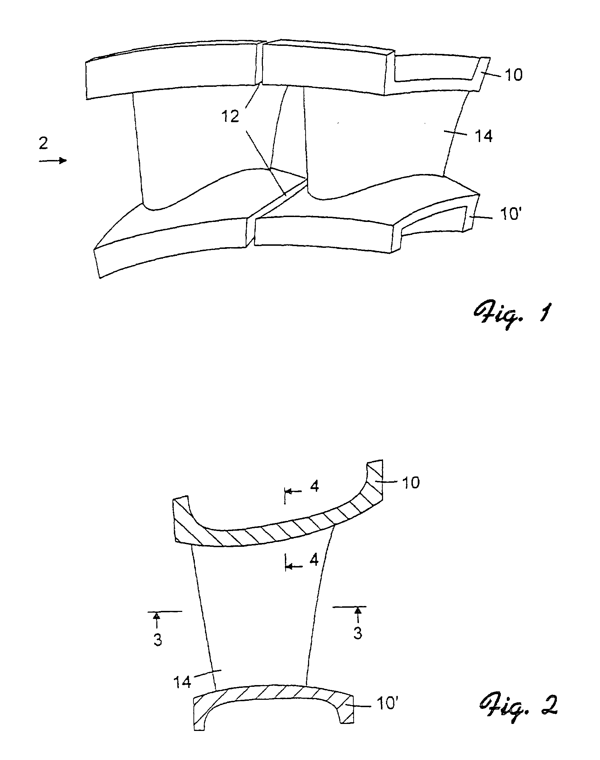

Figuren 1 bis 4 zeigen verschiedene Ansichten einer Leitschaufel einer Gasturbine mit einer Ringbrennkammer nach dem Stand der Technik. Die Leitschaufel umfaßt eine Mehrzahl von oberen und unteren Plattformen 10 und 10' und jeweils ein dazwischen angeordnetes Tragflächenstück 14. Jeweils zwei der oberen und unteren Plattformen (allgemein: Segmente) werden durch einen Spalt 12 voneinander getrennt.

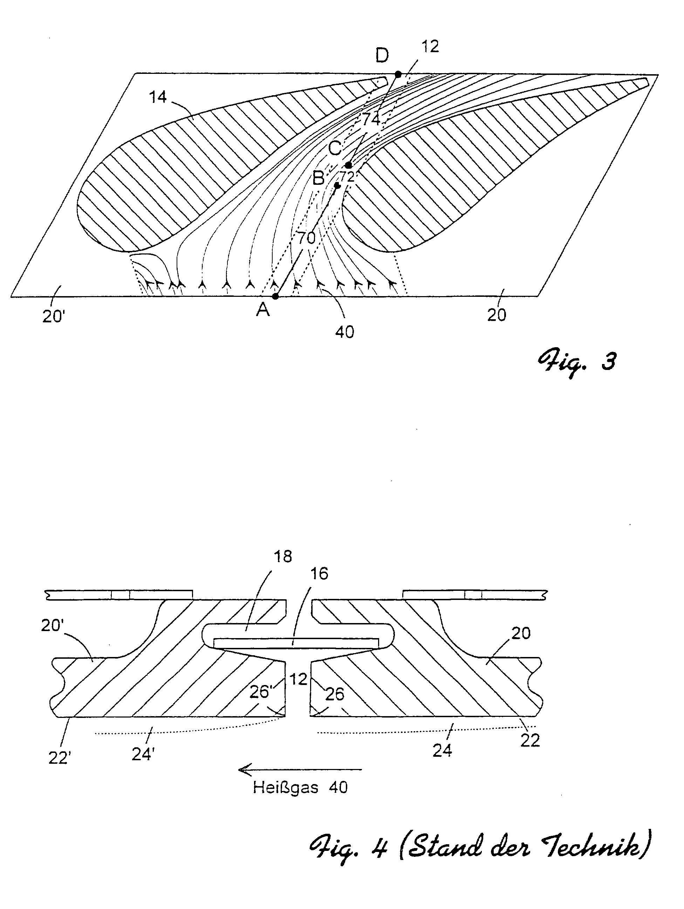

Figur 3 zeigt in Untersicht zwei nebeneinander liegende obere Plattformen 10. Alle Darlegungen gelten für obere und untere Plattformen gleichermaßen, die Plattformen werden daher allgemein als Segmente 20, 20' bezeichnet. In Fig. 3 sind die Partikelbahnlinien des Heißgasstroms 40 auf der Oberfläche der Segmente eingezeichnet. Diese Bahnlinien ergeben sich durch Computersimulationen oder durch direkte Vermessung ausgedienter Komponenten. Der Heißgasstrom 40 hat im wesentlichen eine Geschwindigkeitskomponente entlang des Spalts 12. Zusätzlich gibt es eine Querkomponente (auch: senkrechte Geschwindigkeitskomponente), die dazu führt, daß der Heißgasstrom von einem Segment über den Spalt zum benachbarten Segment führt. In Fig. 3 kehrt die Querkomponente durch die Wirkung des Tragflächenstücks 14 ihr Vorzeichnen um. In einem Teilbereich 70 des Spalts, zwischen den Punkten A und B, fließt der Heißgasstrom vom ersten Segment 20 zum zweiten Segment 20' hin. In einem zweiten Teilbereich 74 des Spalts, zwischen den Punkten C und D gilt das Umgekehrte, d. h. der Heißgasstrom fließt vom zweiten Segment 20' zum ersten Segment 20. In einem Übergangsbereich 72 ist die Richtung des Heißgasstrom im wesentlichen parallel zur Richtung des Spalts 12.

Figur 4 zeigt einen Schnitt der Anschlußstelle zwischen zwei Segmenten im Detail. Die im Inneren der Segmente 20 und 20' angeordnete Aussparung 18 enthält einen Dichtstreifen 16. Der Heißgasstrom 40 strömt an den Oberflächen 22 und 22' der Segmente 20 und 20' entlang. Die Hauptkomponente des Heißgasstroms geht dabei in Fig. 4 in die Papierebene. Zusätzlich gibt es im allgemeinen eine Querrichtung, die in Fig. 4 mit einem Pfeil gekennzeichnet ist. Mit der angegeben Orientierung zeigt Fig. 4 einen Schnitt im ersten Teilbereich 70 (zwischen den Punkten A und B in Fig. 3). Zeigt die Querkomponente etwa wie in Fig. 4 vom ersten Segment 20 zum zweiten Segment 20' so reißt erfahrungsgemäß die Grenzschicht 24 am Spalt 12 ab. Sie bildet sich zwar am zweiten Segment 20' neu (Bezugszeichen 24'), ist aber direkt an der Kante 26' sehr dünn. Dadurch kommt es zu einer erhöhten Wärmebelastung des Segmentmaterials im Bereich der Kante 26'.

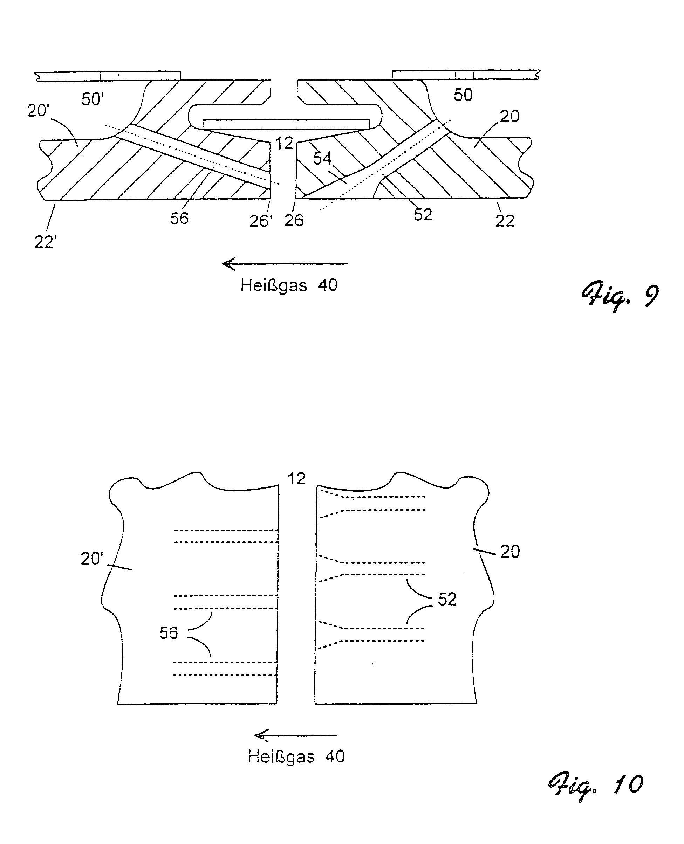

Ein erstes Ausführungsbeispiel entsprechend der Erfindung ist in Fig. 9 gezeigt. Der Schnitt von Fig. 9 zeigt den Fall, daß die Querkomponente der Geschwindigkeit des Heißgasstroms vom ersten Segment 20 zum zweiten Segment 20' zeigt. In dem Teilbereich des Spalts mit dieser Orientierung sind entlang der dem Spalt 12 zugewandten Kante 26 des ersten Segments 20 eine Mehrzahl von Filmkühlbohrungen 52 angebracht, welche die hier auf der Rückseite des Segments 20 befindliche, zugeordnete Kühlluftkammer 50 mit der dem Heißgasstrom ausgesetzten Oberfläche 22 verbinden. Die zylindrischen Filmkühlbohrungen 52 öffnen sich zur Heißgasseite 22 hin trichterförmig (Bezugszeichen 54). Die Achse der Filmkühlbohrungen 52 zeigt auf den Spalt 12 zu, und schließt hier mit der Oberfläche 22 einen Winkel von etwa 35 Grad ein.

Entlang der dem Spalt 12 zugewandten Kante 26' des zweiten Segments 20' ist eine Mehrzahl von Kantenkühlbohrungen 56 angebracht. Sie sind zylindrisch geformt und zeigen auf den Spalt 12 unter einem Winkel von etwa 30 Grad zu. Die Kantenkühlbohrungen 56 enden nicht an der dem Heißgasstrom ausgesetzten Oberfläche 22', sondern münden in den Spalt 12. Die Kantenkühlbohrungen 56 stellen im Spalt 12 Kühlluft bereit, die das eindringende Heißgas abkühlt, während die Filmkühlbohrungen 52 in der Nähe der vom Heißgasstrom beaufschlagten Kante 26' einen Kühlluftfilm erzeugen, der die Kante 26' kühlt und schützt. Durch den gewählten Winkel zwischen den Bohrungen 52, 56 und den Oberflächen 22, 22' werden Verwirbelungen und damit aerodynamische Verluste möglichst vermieden. Insbesondere ist darauf zu achten, daß der Winkel der Kantenkühlbohrungen 56 so flach gehalten ist, daß die austretende Kühlluft nicht sofort in das Heißgas geblasen wird, da es sonst zu starken Verlusten kommen würde, da die Kühlluft entgegen der Flußrichtung des Heißgases ausbläst.

Die Querkomponente der Geschwindigkeit des Heißgasstroms kehrt im vorliegenden Ausführungsbeispiel durch die Wirkung des Tragflächenstücks 14 ihr Vorzeichnen um. Im ersten Teilbereich 70 des Spalts, in dem der Heißgasstrom vom ersten Segment 20 zum zweiten Segment 20' hin fließt ist die Anordnung der Filmkühlbohrungen 52 und Kantenkühlbohrungen 56 wie oben beschrieben. Im zweiten Teilbereich 74 des Spalts, in dem der Heißgasstrom vom zweiten Segment 20' zum ersten Segment 20 hin fließt, ist die Anordnung der Filmkühlbohrungen 52 und Kantenkühlbohrungen 56 vertauscht, die Filmkühlbohrungen 52 sind also entlang der dem Spalt 12 zugewandten Kante 26' des zweiten Segments 20' angebracht, und die Kantenkühlbohrungen 56 sind entlang der dem Spalt 12 zugewandten Kante 26 des ersten Segments 20 angebracht. In einem Übergangsbereich 72 zwischen dem ersten und zweiten Teilbereich wird der Heißgasstrom im wesentlichen parallel zu der Richtung des Spalts strömen. In diesem Übergangsbereich 72 werden im zweiten Aspekt der Erfindung entlang der dem Spalt 12 zugewandten Kante 26, 26' jedes der beiden Segmente 20, 20' Kantenkühlbohrungen 56 angebracht, Filmkühlbohrungen 52 fehlen dort.

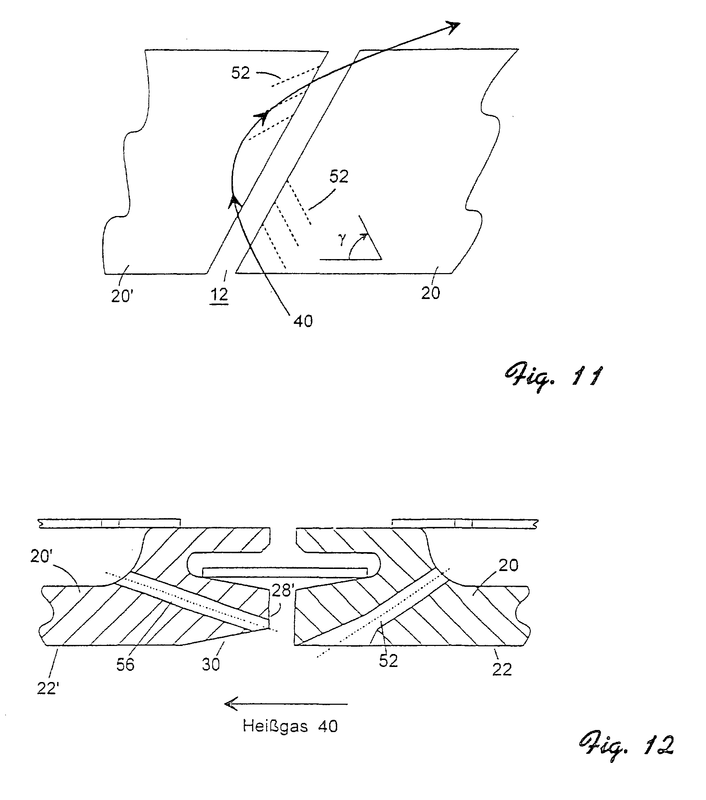

Bevorzugt sind die Filmkühlbohrungen 52 und die Kantenkühlbohrungen 56 gegeneinander lateral versetzt angeordnet, wie in der Untersicht von Figur 10 schematisch gezeigt. In einer weiteren Ausgestaltung weisen die Filmkühlbohrungen 52 und die Kantenkühlbohrungen 56 einen lateralen Anstellwinkel γ auf, dergestalt, daß die Achsen der Bohrungen in allen Teilbereichen etwa entlang der Richtung des Heißgasstroms 40 zeigen. In Fig. 11 sind der Übersichtlichkeit halber nur die Filmkühlbohrungen 52 eingezeichnet, entsprechende angestellte Kantenkühlbohrungen 56 sind aber in einer bevorzugten Ausgestaltung ebenfalls enthalten.

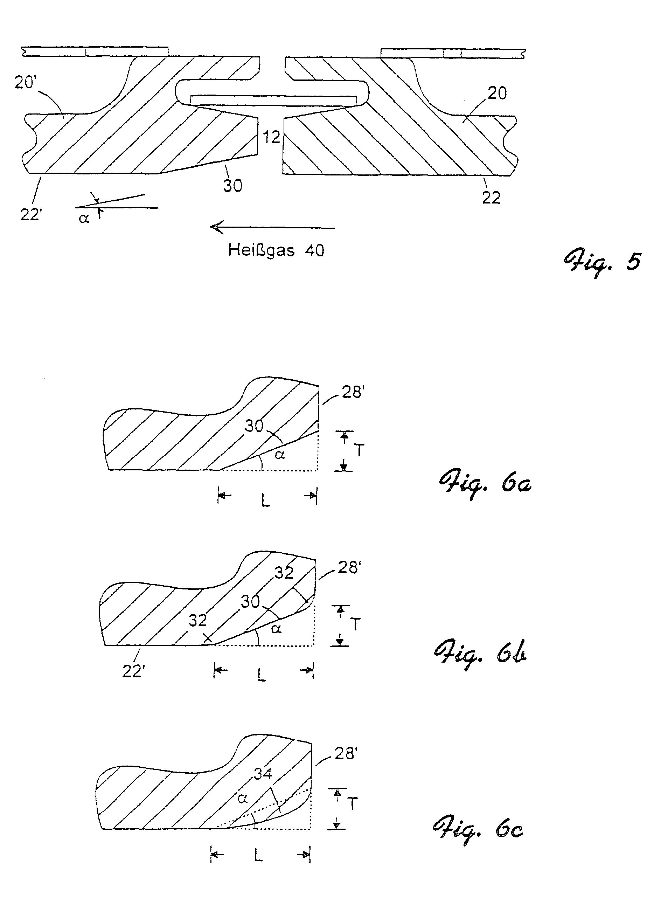

Im Ausführungsbeispiel der Fig. 12 sind Filmkühlbohrungen 52 und Kantenkühlbohrungen 56 angebracht. Zusätzlich ist die vom Heißgas beaufschlagte Kante jedes Segments, wie in den Fig. 5-8 dargestellt abgeschrägt. Die Abschrägung 30 und die Kantenkühlbohrungen 56 sind dabei so aufeinander abgestimmt, daß die Tiefe der Abschrägung 30 bis zu der Öffnung der Kantenkühlbohrung 56 auf der Innenseite 28' des Spalts 12 reicht. Dadurch wird der spaltseitige Endbereich der Kantenkühlbohrungen 56 von der Abschrägung 30 erfaßt, und die Kantenkühlbohrungen 56 bleibt offen, auch wenn die Spaltbreite durch Fertigungstoleranzen oder transiente Bedingungen im Betrieb auf Null reduziert sein sollte. Die Ausgestaltung der Segmente in den einzelnen Teilbereichen ist wie beim ersten bzw. zweiten Ausführungsbeispiel beschrieben.

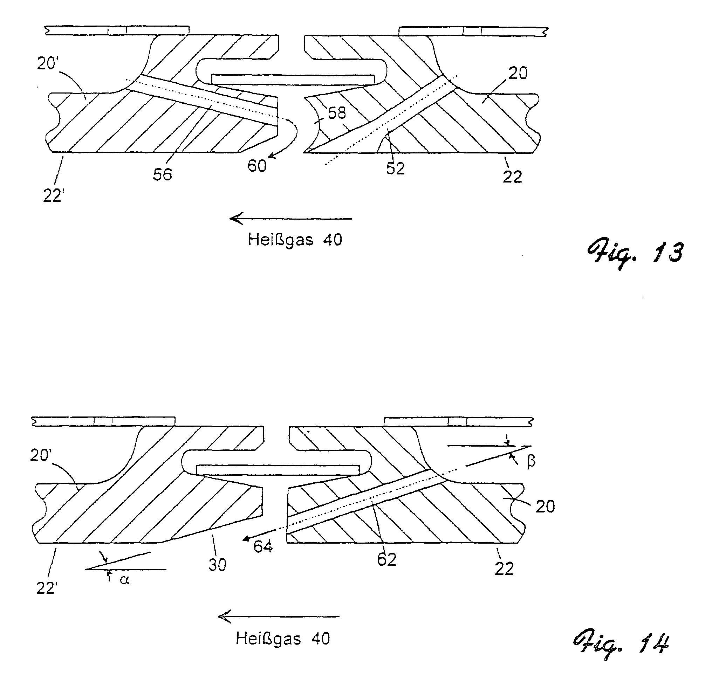

Im Ausführungsbeispiel der Fig. 13 werden ebenfalls Filmkühlbohrungen 52 und Kantenkühlbohrungen 56 wie im ersten Ausführungsbeispiel angebracht, und die vom Heißgas beaufschlagte Kante jedes Segments, wie in den Fig. 5-8 dargestellt, abgeschrägt. Im Gegensatz zum o.g. Ausführungsbeispiel der Fig. 12 erreicht hier die Tiefe der Abschrägung 30 die Kantenkühlbohrungen 56 nicht. Zusätzlich wird die dem Spalt 12 zugewandte Innenseite 26 mit einer etwa parabolischen Aussparung 58 versehen, so daß der aus der Kantenkühlbohrung austretende Kühlluftstrom 60 an der Aussparung 58 umgelenkt wird. Während der Kühlluftstrom 60 im Inneren der Kantenkühlbohrung 56 im wesentlichen entgegen der Richtung des Heißgasstroms 40 fließt, verläßt der Kühlluftstrom 60 durch die Umlenkung den Spalt 12 an der Oberfläche 22' im wesentlichen parallel zum Heißgasstrom 40. Dadurch werden unerwünschte Verwirbelungen möglichst vermieden und ein schützender Kühlluftfilm 60 auch von den Kantenkühlbohrungen 56 geliefert. Im zweiten Teilbereich werden analog zu den bisherigen Ausführungsbeispielen Filmkühlbohrungen 52 und Kantenkühlbohrungen 56 sowie Abschrägung 30 und Aussparung 58 vertauscht. Im Übergangsbereich sind wie im ersten Ausführungsbeispiel auf beiden Seiten des Spalts Kantenkühlbohrungen 56 angeordnet, die Tiefe der Abschrägungen 30 wird allmählich auf Null reduziert, und es sind keine Aussparungen 58 an den Innenseiten 28,28' des Spalts angebracht.

In einem weiteren Ausführungsbeispiel (Fig. 14) sind in dem Teilbereich 70 des Spalts, in dem der Heißgasstrom eine Geschwindigkeitskomponente vom ersten Segment 20 zum zweiten Segment 20' aufweist, entlang der dem Spalt 12 zugewandten Kante 26 des ersten Segments eine Mehrzahl von Kantenkühlbohrungen 62 angebracht. Diese Kantenkühlbohrungen 62 bilden mit der Oberfläche 22 einen Winkel β, hier etwa 40 Grad. Die Kantenkühlbohrungen 62 enden nicht an der dem Heißgasstrom 40 ausgesetzten Oberfläche 22, sondern münden in den Spalt 12. Die vom Heißgasstrom 40 beaufschlagte Kante 26' des zweiten Segments 20' ist wie beim ersten Ausführungsbeispiel unter einem Winkel α, hier etwa 30 Grad, abgeschrägt. Durch die Kombination der stromaufwärts liegenden Kantenkühlbohrung 62 mit der stromabwärts liegenden Abschrägung 30 bleibt der aus der Kantenkühlbohrung 62 austretende Kühlluftstrom 64 nicht auf das Volumen des Spalts 12 beschränkt, er bildet vielmehr eine schützende Kühlluftschicht über der Abschrägung 30 und tritt dann auf die vom Heißgasstrom 40 umströmte Oberfläche 22' aus. Aufgrund der gewählten Orientierung der Kantenkühlbohrung 62 und Abschrägung 30 tritt der Kühlluftstrom 64 im wesentlichen parallel zur Heißgasstromrichtung aus, was unerwünschte Verwirbelungen und aerodynamische Verluste vermeidet und zu einer optimierten Wirkung der Kühlluft führt.

Weitere Ausführungsbeispiele für mögliche Ausführungen der Abrundungen oder Abschrägungen der Segmente zeigen der Fig. 5-8. Bei einer Querkomponente vom ersten Segment 20 zum zweiten Segment 20' ist im ersten Ausführungsbeispiel die vom Heißgasstrom beaufschlagte Kante durch Abschrägen unter einem Winkel von etwa 30 Grad zurückgesetzt (Fig. 5 Bezugszeichen 30). Es wurde gefunden, daß dadurch die Grenzschicht 24 des stromaufwärts gelegenen ersten Segments 20 am Spalt 12 nicht abreißt. Die Tiefe der Abschrägung T wird so gewählt, daß die Abschrägung sich nicht bis zur den Dichtstreifen 16 enthaltenen Aussparung 18 erstreckt. Die Abschrägung 30 wie eben beschrieben ist in Fig. 6a dargestellt, alternative Abwandlungen sind in Fig. 6b und 6c im Detail gezeigt.

In Fig. 6b ist der Übergang zwischen der abgeschrägten Oberfläche 30 und der Innenseite des Spalts 28' nicht abrupt, sondern abgerundet, etwa in Form eines Ellipsenteilstücks 32 ausgeführt. Dasselbe gilt für den Übergang zwischen der abgeschrägten Oberfläche 30 und der unveränderten Oberfläche des Segments 22'. Die Gefahr des Abreißens der Grenzschicht wird durch diese Ausgestaltung weiter verringert. Figur 6c zeigt, daß auch die gesamte Zurücksetzung als Abrundung 34 ausgeführt werden kann. vorteilhaft geschieht dies in Form eines Ellipsenviertels wie in Fig. 6c. Die Ellipse weist Halbachsen der Länge L bzw. T auf. Ein mit der Abschrägung von Fig. 6a vergleichbarer Winkel ergibt sich bei dem Ellipsenstück durch das Verhältnis der beiden Halbachsen. In Fig. 6c ist dieser Winkel, α = arctan (T/L), gleich groß wie in Fig. 6a gewählt, hier also 30 Grad. Die Gefahr des Abreißens der Grenzschicht am Spalt ist auch bei dieser Alternative sehr gering.

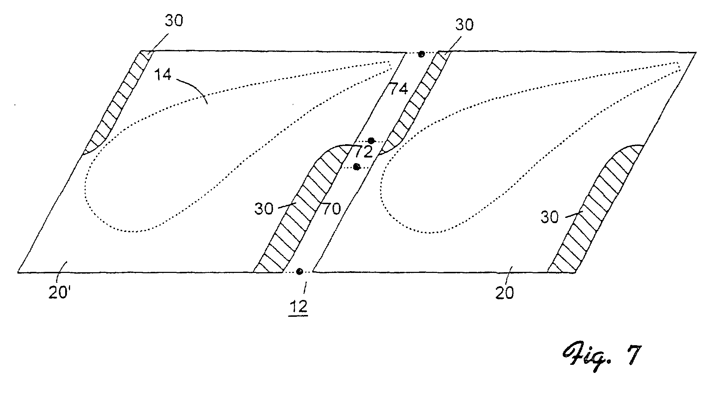

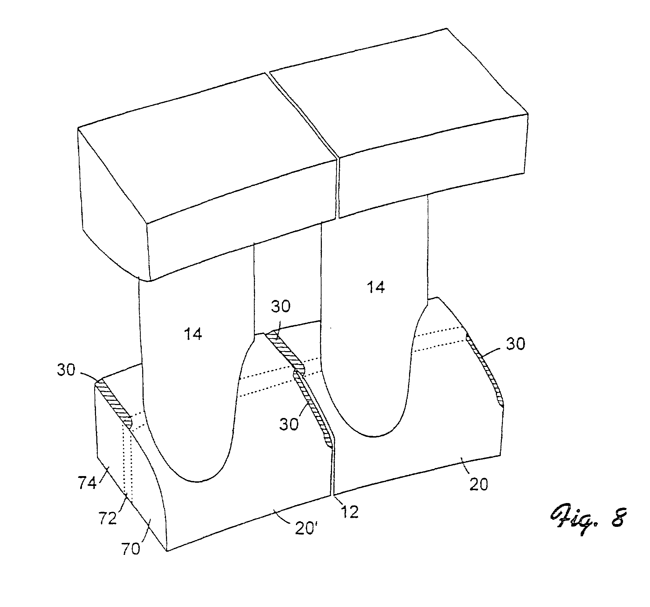

Nach Fig. 3 kehrt die Querkomponente der Geschwindigkeit des Heißgasstroms im vorliegenden Ausführungsbeispiel durch die Wirkung des Tragflächenstücks 14 ihr Vorzeichen um. Im ersten Teilbereich 70 des Spalts, in dem der Heißgasstrom vom ersten Segment 20 zum zweiten Segment 20' hin fließt, ist die beaufschlagte Kante des zweiten Segments 20' abgeschrägt. Figuren 7 und 8 zeigen, daß in dem zweiten Teilbereich 74 des Spalts, in dem der Heißgasstrom vom zweiten Segment 20' zum ersten Segment 20 hin fließt, die beaufschlagte Kante des ersten Segments 20 abgeschrägt ist. In einem Übergangsbereich 72 in dem die Richtung des Heißgasstrom im wesentlichen parallel zur Richtung des Spalts 12 ist, wird die Tiefe der Abschrägung an beiden Segmenten allmählich auf Null reduziert. Wie bereits dargestellt, sind die Abschrägungen der Segmente entsprechend den Fig. 5-8 allerdings im Zusammenhang mit den Kühlluftbohrungen zu sehen.

### Bezugszeichenliste

- 10: obere Plattform
- 10': untere Plattform
- 12: Spalt
- 14: Tragflächenstück
- 16: Dichtstreifen
- 18: Aussparung im Segmentinneren
- 20: erstes Segment
- 20': zweites Segment
- 22, 22': dem Heißgasstrom ausgesetzte Oberflächen der Segmente
- 24, 24': Grenzschicht
- 26, 26': dem Spalt zugewandte Kante der Segmente
- 28, 28': Innenseite des Segmente
- 30: abgeschrägte Oberfläche
- 32: gradueller Übergang der Abschrägung
- 34: abgerundete Oberfläche
- 40: Heißgasstrom
- 50, 50': Kühlluftkammer
- 52: Filmkühlbohrung
- 54: trichterförmige Öffnung der Filmkühlbohrung
- 56: Kantenkühlbohrung
- 58: konkave Aussparung
- 60: Kühlluftstrom
- 62: Kantenkühlbohrung (alternative Anordnung)
- 64: Kühlluftstrom
- 70: erster Teilbereich des Spalts
- 72: Übergangsbereich
- 74: zweiter Teilbereich des Spalts

## Patentansprüche

1. Segmentanordnung für Plattformen an deren Oberfläche ein Heißgasstrom (40) entlangströmt, mit nebeneinander angeordneten, jeweils durch einen Spalt (12) voneinander getrennten Segmenten (20, 20'), wobei in mindestens einem Teilbereich (70) des Spalts (12) der Heißgasstrom (40) eine Geschwindigkeitskomponente senkrecht zur Richtung des Spaltes, von einem ersten Segment (20) zu einem zweiten Segment (20') aufweist, wobei in besagtem Teilbereich (70) entlang der dem Spalt (12) zugewandten Kante (26) des ersten Segments (20) zumindest eine Filmkühlbohrung (52) eine dem ersten Segment zugeordnete Kühlluftkammer (50) mit der dem Heißgasstrom (40) ausgesetzten Oberfläche (22) verbindet, und/oder daß in besagtem Teilbereich (70) entlang der dem Spalt (12) zugewandten Kante (26') des zweiten Segments (20') zumindest eine Kantenkühlbohrung (56) eine dem zweiten Segment zugeordnete Kühlluftkammer (50') mit der Innenseite (28') des Spalts (12) verbindet.
**dadurch gekennzeichnet, daß**
in einem zweiten Teilbereich (74) des Spalts (12) der Heißgasstrom (40) eine Geschwindigkeitskomponente senkrecht zur Richtung des Spaltes, von dem zweiten Segment (20') zu dem ersten Segment (20) aufweist, und in besagtem Teilbereich (74) entlang der dem Spalt (12) zugewandten Kante (26') des zweiten Segments (20') zumindest eine Filmkühlbohrung (52) die dem zweiten Segment zugeordnete Kühlluftkammer (50') mit der dem Heißgasstrom (40) ausgesetzten Oberfläche (22') verbindet, und/oder daß in besagtem Teilbereich (74) entlang der dem Spalt (12) zugewandten Kante (26) des ersten Segments (20) zumindest eine Kantenkühlbohrung (56) die dem ersten Segment zugeordnete Kühlluftkammer (50) mit der Innenseite (28) des Spalts (12) verbindet.

2. Segmentanordnung nach Anspruch 1, **dadurch gekennzeichnet, daß** zwischen dem ersten und zweiten Teilbereich (70, 74) ein Übergangsbereich (72) angeordnet ist, in dem der Heißgasstrom (40) im wesentlichen entlang der Richtung des Spalts (12) strömt, und daß in besagtem Übergangsbereich (72) entlang der dem Spalt (12) zugewandten Kanten (26, 26') der beiden Segmente (20, 20') zumindest eine Kantenkühlbohrung (56) zumindest eine der den Segmenten (20, 20') zugeordneten Kühlluftkammern (50, 50') mit der Innenseite (28, 28') des Spalts (12) verbindet.

3. Segmentanordnung nach Anspruch 1 oder 2, bei der die Achsen der Filmkühlbohrungen (52) auf den Spalt (12) zuweisen, und mit der Oberfläche (22) des besagte Filmkühlbohrungen (52) enthaltenden Segments (20) einen Winkel zwischen 10° und 50°, bevorzugt zwischen 25° und 45° einschließen, und/oder bei der die Achsen der Kantenkühlbohrungen (56) auf den Spalt (12) zuweisen, und mit der Oberfläche (22') des besagte Kantenkühlbohrungen (56) enthaltenden Segments (20') einen Winkel zwischen 5° und 50°, bevorzugt zwischen 20° und 40° einschließen.

4. Segmentanordnung nach einem der Ansprüche 1 bis 3, bei der die Filmkühlbohrungen (52) zylindrisch und/oder trichterförmig geformt sind, und/oder bei der die Kantenkühlbohrungen (56) zylindrisch geformt sind.

5. Segmentanordnung nach einem der Ansprüche 1 bis 4, bei der die Filmkühlbohrungen (52) auf der der Kühlluftkammer (50) zugewandten Seite zylindrisch geformt sind, und auf der Heißgasseite (22) eine trichterförmige Öffnung (54) aufweisen.

6. Segmentanordnung nach einem der Ansprüche 1 bis 5, bei der die Filmkühlbohrungen (52) und die Kantenkühlbohrungen (56) gegeneinander lateral versetzt angeordnet sind.

7. Segmentanordnung nach einem der Ansprüche 1 bis 6, bei der die Filmkühlbohrungen (52) und/oder die Kantenkühlbohrungen (56) einen lateralen Anstellwinkel γ zur Seitenkante des Segments aufweisen.

8. Segmentanordnung nach Anspruch 7, bei der der laterale Anstellwinkel γ so gewählt ist, daß die Achsen der Filmkühlbohrungen (52) und/oder der Kantenkühlbohrungen (56) im wesentlichen entlang der Richtung des Heißgasstroms (40) zeigen.

9. Segmentanordnung nach einem der Ansprüche 1 bis 8, bei der jeweils der vom Heißgasstrom (40) beaufschlagte Teilbereich (70, 74) der Kante (26, 26') jedes Segments (20, 20') abgeschrägt (30) oder abgerundet (34) ist.

10. Segmentanordnung nach einem der Ansprüche 2 bis 8, bei der jeweils der vom Heißgasstrom (40) beaufschlagte Teilbereich (70, 74) der Kante (26, 26') jedes Segments (20, 20') abgeschrägt (30) oder abgerundet (34) ist, und bei der im besagten Übergangsbereich (72) die Abschrägung (30) oder Abrundung (34) der besagten Teilbereiche (70,74) allmählich auf Null zurückgeführt ist.

11. Segmentanordnung nach einem der Ansprüche 9 bis 10, bei der die besagten Kanten (26, 26') der Segmente (20, 20') unter einem Winkel α abgeschrägt sind, und α zwischen 1° und 60°, bevorzugt zwischen 20° und 40° liegt.

12. Segmentanordnung nach Anspruch 11, bei der der Übergang zwischen den abgeschrägten Flächen (30) und der Innenseite (28) jedes Segments (20), und/oder der Übergang zwischen den abgeschrägten Flächen (30) und den nicht abschrägten Oberflächen (22) jedes Segments (20) in Form eines Ellipsenteilstücks (32) abgerundet ist.

13. Segmentanordnung nach einem der Ansprüche 9 bis 10, wobei die besagten Kanten (26, 26') der Segmente (20, 20') in Form eines Ellipsenviertels (34) abgerundet sind, und die Ellipse Halbachsen der Länge L bzw. T aufweist, wobei der Winkel α = arctan T/L zwischen 1° und 60°, bevorzugt zwischen 20° und 40° liegt.

14. Segmentanordnung nach einem der Ansprüche 9 bis 13, wobei die Tiefe der Abschrägungen (30) oder Abrundungen (34) so gewählt ist, daß sie bis zu den Öffnungen der Kantenkühlbohrungen (56) an der Innenseite (28') des Spalts (12) reichen.

15. Segmentanordnung nach einem der Ansprüche 9 bis 13, wobei die Tiefe der Abschrägungen (30) oder Abrundungen (34) so gewählt ist, daß sie die Öffnungen der Kantenkühlbohrungen (56) an der Innenseite (28') des Spalts (12) nicht erreichen, und bei der die Innenseite (28) jedes mit Filmkühlbohrungen versehenen Segments (20) mit einer konkaven Aussparung (58) versehen ist.

16. Segmentanordnung nach einem der Ansprüche 9 bis 15, wobei in dem Spalt (12) ein Dichtstreifen (16) in einer Aussparung (18) angeordnet ist, und die Tiefe der Abschrägung (30) oder Abrundung (34) stets so klein gewählt ist, daß die Abschrägung (30) oder Abrundung (34) die Aussparung (18) nicht erreicht.

## Claims

1. Segment arrangement for platforms along the surface of which a hot-gas stream (40) flows, having segments (20, 20') arranged next to one another and in each case separated from one another by a gap (12), the hot-gas stream (40), in at least one section (70) of the gap (12), having a velocity component perpendicular to the direction of the gap from a first segment (20) to a second segment (20'), **characterized in that**, in said section (70), along that edge (26) of the first segment (20) which faces the gap (12), at least one film-cooling bore (52) connects a cooling-air chamber (50), allocated to the first segment, to the surface (22) subjected to the hot-gas stream (40), and/or that [sic], in said section (70), along that edge (26') of the second segment (20') which faces the gap (12), at least one edge-cooling bore (56) connects a cooling-air chamber (50'), allocated to the second segment, to the inside (28') of the gap (12). [sic]
**characterized in that** in a second section (74) of the gap (12), the hot-gas stream (40) has a velocity component perpendicular to the direction of the gap from the second segment (20') to the first segment (20), and, in said section (74), along that edge (26') of the second segment (20') which faces the gap (12), at least one film-cooling bore (52) connects the cooling-air chamber (50'), allocated to the second segment, to the surface (22') subjected to the hot-gas stream (40), and/or **in that**, in said section (74), along that edge (26) of the first segment (20) which faces the gap (12), at least one edge-cooling bore (56) connects the cooling-air chamber (50), allocated to the first segment, to the inside (28) of the gap (12).

2. Segment arrangement according to Claim 9, **characterized in that** a transition region (72) in which the hot-gas stream (40) flows essentially in the direction of the gap (12) is arranged between the first and second sections (70, 74), and **in that**, in said transition region (72), along those edges (26, 26') of the two segments (20, 20') which face the gap (12), at least one edge-cooling bore (56) connects at least one of the cooling-air chambers (50, 50'), allocated to the segments (20, 20'), to the inside (28, 28') of the gap (12).

3. Segment arrangement according to Claim 1 or 2, in which the axes of the film-cooling bores (52) point towards the gap (12) and enclose with the surface (22) of the segment (20) containing said film-cooling bores (52) an angle of between 10° and 50°, preferably between 25° and 45°, and/or in which the axes of the edge-cooling bores (56) point towards the gap (12) and enclose with the surface (22') of the segment (20') containing said edge-cooling bores (56) an angle of between 5° and 50°, preferably between 20° and 40°.

4. Segment arrangement according to one of Claims 1 to 3, in which the film-cooling bores (52) are of cylindrical and/or funnel shape, and/or in which the edge-cooling bores (56) are of cylindrical shape.

5. Segment arrangement according to one of Claims 1 to 4, in which the film-cooling bores (52) are of cylindrical shape on the side facing the cooling-air chamber (50) and have a funnel-shaped opening (54) on the hot-gas side (22).

6. Segment arrangement according to one of Claims 1 to 5, in which the film-cooling bores (52) and the edge-cooling bores (56) are staggered laterally.

7. Segment arrangement according to one of Claims 1 to 6, in which the film-cooling bores (52) and/or the edge-cooling bores (56) have a lateral setting angle γ to the side edge of the segment.

8. Segment arrangement according to Claim 7, in which the lateral setting angle γ is selected in such a way that the axes of the film-cooling bores (52) and/or of the edge-cooling bores (56) point essentially in the direction of the hot-gas stream (40).

9. Segment arrangement according to one of Claims 1 to 8, in which in each case that section (70, 74) of the edge (26, 26') of each segment (20, 20') which is acted upon by the hot-gas stream (40) is bevelled (30) or rounded off (34).

10. Segment arrangement according to one of Claims 2 to 8, in which in each case that section (70, 74) of the edge (26, 26') of each segment (20, 20') which is acted upon by the hot-gas stream (40) is bevelled (30) or rounded off (34), and in which, in said transition region (72), the bevel (30) or rounded-off portion (34) of the said sections (70, 74) is gradually reduced to zero.

11. Segment arrangement according to either of Claims 9 and 10, in which the said edges (26, 26') of the segments (20, 20') are bevelled at an angle α, and α is between 1° and 60°, preferably between 20° and 40°.

12. Segment arrangement according to Claim 11, in which the transition between the bevelled surfaces (30) and the inside (28) of each segment (20), and/or the transition between the bevelled surfaces (30) and the non-bevelled surfaces (22) of each segment (20), is rounded off in the form of an elliptical section (32).

13. Segment arrangement according to either of Claims 9 and 10, the said edges (26, 26') of the segments (20, 20') being rounded off in the form of a quarter ellipse (34), and the ellipse having semiaxes of length L and T respectively, the angle α = arc tan T/L being between 1° and 60°, preferably between 20° and 40°.

14. Segment arrangement according to one of Claims 9 to 13, the depth of the bevels (30) or rounded-off portions (34) being selected in such a way that they reach up to the openings of the edge-cooling bores (56) at the inside (28') of the gap (12).

15. Segment arrangement according to one of Claims 9 to 13, the depth of the bevels (30) or rounded-off portions (34) being selected in such a way that they do not reach the openings of the edge-cooling bores (56) at the inside (28') of the gap (12), and in which the inside (28) of each segment (20) provided with film-cooling bores is provided with a concave recess (58).

16. Segment arrangement according to one of Claims 9 to 15, a sealing strip (16) being arranged in a recess (18) in the gap (12), and the depth of the bevel (30) or rounded-off portion (34) always being selected to be so small that the bevel (30) or rounded-off portion (34) does not reach the recess (18).

## Revendications

1. Disposition de segments pour plate-formes à la surface desquelles circule un flux de gaz chaud (40), avec des segments (20, 20') disposés côte à côte et séparés par une fente (12), le flux de gaz chaud (40) présentant une composante de vitesse, depuis un premier segment (20) vers un second segment (20'), perpendiculaire à la direction de la fente sur une partie (70) au moins de la fente (12), au moins un trou pour le refroidissement par film (52) ménagé dans ladite partie (70) le long du bord (26) tourné vers la fente (12) du premier segment (20) reliant une chambre d'air de refroidissement (50) associée au premier segment à la surface (22) exposée au flux de gaz chaud (40) et/ou au moins un trou pour le refroidissement d'un bord (56) ménagé dans ladite partie (70) le long du bord (26') tourné vers la fente (12) du second segment (20') reliant une chambre d'air de refroidissement (50') associée au second segment à la face interne (28') de la fente (12),
**caractérisée en ce que**,
dans une deuxième partie (74) de la fente (12), le flux de gaz chaud (40) présente une composante de vitesse, depuis le second segment (20') vers le premier segment (20), perpendiculaire à la direction de la fente et qu'au moins un trou pour le refroidissement par film (52) ménagé dans ladite partie (74) le long du bord (26') tourné vers la fente (12) du second segment (20') relie la chambre d'air de refroidissement (50') associée au second segment à la surface (22') exposée au flux de gaz chaud (40) et/ou qu'au moins un trou pour le refroidissement d'un bord (56) ménagé dans ladite partie (74) le long du bord (26) tourné vers la fente (12) du premier segment (20) relie la chambre d'air de refroidissement (50) associée au premier segment à la face interne (28) de la fente (12).

2. Disposition de segments selon la revendication 1, **caractérisée en ce qu'**entre la première et la deuxième partie (70, 74) est disposée une zone de transition (72) dans laquelle le flux de gaz chaud (40) s'écoule sensiblement suivant la direction de la fente (12) et qu'au moins un trou pour le refroidissement d'un bord (56) ménagé dans ladite zone de transition (72), le long des bords (26, 26') tournés vers la fente (12) des deux segments (20, 20'), relie au moins une des chambres d'air de refroidissement (50, 50') associées aux segments (20, 20') à la face interne (28, 28') de la fente (12).

3. Disposition de segments selon la revendication 1 ou 2, selon laquelle les axes des trous pour le refroidissement par film (52) pointent vers la fente (12) et forment avec la surface (22) du segment (20) pourvu desdits trous pour le refroidissement par film (52) un angle compris entre 10° et 50°, de préférence compris entre 25° et 45°, et/ou selon laquelle les axes des trous pour le refroidissement d'un bord (56) pointent vers la fente (12) et forment avec la surface (22') du segment (20') pourvu desdits trous pour le refroidissement d'un bord (56) un angle compris entre 5° et 50°, de préférence compris entre 20° et 40°.

4. Disposition de segments selon l'une quelconque des revendications 1 à 3, selon laquelle les trous pour le refroidissement par film (52) sont de forme cylindrique et/ou conformés en forme d'entonnoir et/ou selon laquelle les trous pour le refroidissement d'un bord (56) sont de forme cylindrique.

5. Disposition de segments selon l'une quelconque des revendications 1 à 4, selon laquelle les trous pour le refroidissement par film (52) sont de forme cylindrique sur le côté tourné vers la chambre d'air de refroidissement (50) et comportent sur le côté du gaz chaud (22) un orifice (54) en forme d'entonnoir.

6. Disposition de segments selon l'une quelconque des revendications 1 à 5, selon laquelle les trous pour le refroidissement par film (52) et les trous pour le refroidissement d'un bord (56) sont décalés latéralement les uns par rapport aux autres.

7. Disposition de segments selon l'une quelconque des revendications 1 à 6, selon laquelle les trous pour le refroidissement par film (52) et/ou les trous pour le refroidissement d'un bord (56) forment un angle d'incidence latéral γ avec le bord latéral du segment.

8. Disposition de segments selon la revendication 7, selon laquelle l'angle d'incidence latéral γ est choisi de manière à ce que les axes des trous pour le refroidissement par film (52) et/ou des trous pour le refroidissement d'un bord (56) sont dirigés sensiblement suivant la direction du flux de gaz chaud (40).

9. Disposition de segments selon l'une quelconque des revendications 1 à 8, selon laquelle la partie (70, 74) du bord (26, 26') de chacun des segments (20, 20'), qui est exposée au flux de gaz chaud (40), est biseautée (30) ou arrondie (34).

10. Disposition de segments selon l'une quelconque des revendications 2 à 8, selon laquelle la partie (70, 74) du bord (26, 26') de chacun des segments (20, 20'), qui est exposée au flux de gaz chaud (40), est biseautée (30) ou arrondie (34) et selon laquelle, dans ladite zone de transition (72), le biseau (30) ou l'arrondi (34) desdites parties (70, 74) est progressivement réduit à zéro.

11. Disposition de segments selon l'une quelconque des revendications 9 à 10, selon laquelle lesdits bords (26, 26') des segments (20, 20') sont biseautés selon un angle α, α étant compris entre 1° et 60°, de préférence entre 20° et 40°.

12. Disposition de segments selon la revendication 11, selon laquelle la transition entre les faces biseautées (30) et la face interne (28) de chacun des segments (20) et/ou la transition entre les faces biseautées (30) et les surfaces (22) non biseautées de chacun des segments (20) est arrondie en forme de tronçon elliptique (32).

13. Disposition de segments selon l'une quelconque des revendications 9 à 10, lesdits bords (26, 26') des segments (20, 20') étant arrondis en forme de quart d'ellipse (34), l'ellipse comportant des demi-axes de longueur L, voire T, l'angle α = arctan T/L étant compris entre 1° et 60°, de préférence entre 20° et 40°.

14. Disposition de segments selon l'une quelconque des revendications 9 à 13, l'extension des biseaux (30) ou arrondis (34) étant choisie de manière à leur permettre d'atteindre les orifices des trous pour le refroidissement d'un bord (56) sur la face interne (28') de la fente (12).

15. Disposition de segments selon l'une quelconque des revendications 9 à 13, l'extension des biseaux (30) ou arrondis (34) étant choisie de manière à ne pas leur permettre d'atteindre les orifices des trous pour le refroidissement d'un bord (56) sur la face interne (28') de la fente (12) et selon laquelle la face interne (28) de chacun des segments (20) pourvus de trous pour le refroidissement par film est munie d'un évidement (58) concave.

16. Disposition de segments selon l'une quelconque des revendications 9 à 15, une bande d'étanchéité (16) étant disposée dans un évidement (18) ménagé dans la fente (12) et l'extension du biseau (30) ou de l'arrondi (34) étant toujours choisie suffisamment petite pour empêcher que le biseau (30) ou l'arrondi (34) atteigne l'évidement (18).
